(19)

**Europäisches Patentamt**
**European Patent Office**
**Office européen des brevets**

(11)     **EP 1 829 608 B1**

(12)                          **EUROPÄISCHE PATENTSCHRIFT**

(45) Veröffentlichungstag und Bekanntmachung des Hinweises auf die Patenterteilung:
**03.10.2007  Patentblatt 2007/40**

(51) Int Cl.:
*B01J 19/00* *(2006.01)*        *C01B 3/32* *(2006.01)*
*C01B 3/38* *(2006.01)*

(21) Anmeldenummer: **06003655.5**

(22) Anmeldetag: **23.02.2006**

(54) **Verfahren zur Herstellung eines Mikroreaktors und dessen Verwendung als Reformer**

Process for manufacturing a microreactor and its use as reformer

Procédé de production d'un microréacteur et son utilisation comme réformeur

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**05.09.2007  Patentblatt 2007/36**

(73) Patentinhaber: **ATOTECH Deutschland GmbH**
**10553 Berlin (DE)**

(72) Erfinder:
• **Kurtz, Olaf**
**13053 Berlin (DE)**
• **Herber, Ralph**
**12305 Berlin (DE)**
• **Madry, Christian**
**13053 Berlin (DE)**

• **Schäfer, Gerd**
**12045 Berlin (DE)**

(74) Vertreter: **Patentanwälte Bressel und Partner**
**Radickestrasse 48**
**12489 Berlin (DE)**

(56) Entgegenhaltungen:
**EP-B1- 1 198 344          DE-A1- 19 708 472**
**DE-C2- 19 825 102**

• **SRINIVAS S ET AL: "A scalable silicon microreactor for preferential CO oxidation: performance comparison with a tubular packed-bed microreactor" APPLIED CATALYSIS A: GENERAL, ELSEVIER SCIENCE, AMSTERDAM, NL, Bd. 274, Nr. 1-2, 28. Oktober 2004 (2004-10-28), Seiten 285-293, XP004558626 ISSN: 0926-860X**

**EP 1 829 608 B1**

**Beschreibung**

Die vorliegende Erfindung betrifft ein Verfahren zur Herstellung eines chemischen mikrostrukturierten Reaktors, der mit Katalysator beladene Durchführungen aufweist, sowie die Verwendung eines erfindungsgemäß hergestellten mikrostrukturierten Reaktors als Reformer von Kohlenwasserstoffen und Alkoholen.

In Folge zunehmender Miniaturisierung und der Notwendigkeit eines immer effizienteren Energiemanagements in verfahrenstechnischen sowie ingenieurstechnischen Bauteilkomponenten- und Systemauslegungen (Systemintegration) von chemischen Reaktoren finden mikrostrukturierte Reaktoren, Wärmetauscher und Kühler (Mikrostrukturbauteile) sowohl in Forschungs- und Entwicklungsprojekten als auch bereits in ersten industriellen Prozessen Anwendung. Mikrostrukturbauteile bestehen im Allgemeinen aus einem Stapel dünner metallischer Bleche, die sich durch feine Strukturen auszeichnen. Durch Fügen der strukturierten Bleche entstehen Bauteile mit sehr feinen Kanälen. Die Strukturierung der Bleche kann durch Trockenätzverfahren, durch nasschemische Tiefenätztechnik oder durch mechanische Mikrofertigung erfolgen.

Üblicherweise werden die strukturierten Bleche mit einer Deck- und einer Bodenplatte versehen und zu einem kompakten Bauteil gefügt. Bei entsprechender Konstruktion der Bauteile lässt sich ein maximaler Wärme- bzw. Leistungsaustausch bei minimalem Bauteilvolumen erzielen, wobei die Strömungsbedingungen in dem Bauteil definiert einstellbar und nahezu isotherme Bedingungen in den Mikrokanälen erreichbar sind.

Diese Struktur, typischerweise mit Kanaltiefen im Bereich von 50 bis 2000 μm, kann beispielsweise durch Trockenätzverfahren, nasschemische Tiefenätztechnik, Laserstrahl, LIGA-Verfahren, Funkenerosion oder mit mechanischer Mikrofertigung erzeugt werden. Beispielsweise können die Reaktoren auch mit Verfahren aus der Si-Chip-Technologie hergestellt werden (zum Bonden der einzelnen Lagen werden als typische Fügebedingungen 450°C, 750V angegeben: anodic bonding). Die strukturierten Lagen dieser Bauteile, meist Bleche, werden abschließend mit einer Deck- und einer Bodenplatte versehen und zu einem kompakten Bauteil gefügt. In die Deckplatte werden für die Anschlüsse des Ein- und Auslassbereiches zwei oder mehrere Durchbrüche vorzugsweise geätzt, gestanzt oder gelasert.

Mikrostrukturierte Reaktoren weisen typischerweise einen Einlassbereich auf, in den Reaktanden durch einen geeigneten Anschluss gelangen, sich aus diesem homogen auf Kanäle verteilen und aus denen in den Kanälen entstehende Produkte über einen Auslassbereich wieder heraus geführt werden. Die Kanäle können katalytisch beschichtet sein. Die Geometrie und Anordnung dieser Kanäle und der Stege zwischen diesen Kanälen sind dabei so ausgelegt, dass die Fluiddynamik, der Wärmeübergang und der Druckverlust in einem durch die jeweilige Anwendung definierten optimalen Verhältnis zueinander stehen. Die innere Struktur der Bauteile ermöglicht einen maximalen Wärme- bzw. Leistungsaustausch auf minimaler Fläche, wobei gleichzeitig die Strömungsbedingungen definiert einstellbar sind und eine hohe Isothermie in den Kanälen herrscht. Diese Isothermie ist eine wichtige Voraussetzung zur Vermeidung von sog. *hot* und *cold spots* innerhalb der Fluidkanäle, die zur Beeinträchtigung der Aktivität oder gar zur Deaktivierung eingesetzter Katalysatoren führen können. Neben der Vermeidung von *hot* und *cold* spots führt die Möglichkeit zu einer gegenüber herkömmlichen Reaktoren präziseren Temperaturführung während des Reaktorbetriebes auch zur Unterdrückung unerwünschter Nebenreaktionen, zur Erhöhung der Selektivitäten bzw. der Produktausbeuten und damit schließlich zu einer deutlichen Steigerung der Wirtschaftlichkeit chemischer Reaktionen. Zusätzlich können Ablagerungen, beispielsweise durch eine Verkokung, auf einem Katalysatorsystem durch die kontrollierte Temperaturführung vermieden werden.

Hinzu kommt, dass durch die rasche Wärmeabfuhr in mikrostrukturierten Reaktoren ein erhöhter Sicherheitsstandard gewährleistet werden kann. Stark exotherme Reaktionen können auf diese Weise kontrolliert - selbst innerhalb der Explosionsgrenzen durchgeführt werden. Weiterhin eignen sich die beschriebenen Reaktorsysteme auf Grund der kurzen thermischen Ansprechzeiten besonders für dynamische Prozesse, bei denen sich schnell ändernde Reaktionsbedingungen, wie Durchsatz und Temperatur, gefordert sind.

Mehr als 90 % aller chemischen industriellen Produktionsprozesse werden mit Katalysatoren durchgeführt (J.M.Thomas, W.J.Thomas, "Principles and Practice of Heterogeneous Catalysis", Verlag Chemie, Weinheim, 1997). Dies gilt insbesondere für Gasphasenreaktionen. Dieser enormen Zahl steht die bislang in der Praxis nicht gelöste Aufgabe gegenüber, heterogen katalysierte Reaktionen in mikrostrukturierten Reaktoren im industriellen Maßstab erfolgreich durchzuführen.

Für die Beladung herkömmlicher Reaktoren sind katalytisch aktive Pellets, Kugeln, Raschig-Ringe, Berl-Sättel, Pulver etc. kommerziell erhältlich, die in das Katalysatorbett eines Festbettreaktors als Schüttung eingebracht werden. Für Reaktionen mit besonders kurzer Verweilzeit werden auch Katalysatornetze, meistens Edelmetallnetze, eingesetzt. Diese Beschichtungs- und Katalysator-Darreichungsformen lassen sich gar nicht oder nur bedingt auf mikrostrukturierte Reaktoren übertragen. Ursachen hierfür sind beispielsweise die Verstopfungsgefahr der Kanäle, der erhöhte Druckabfall, das inhomogene Strömungsprofil, die damit verbundenen inhomogenen Konzentrations- und Temperaturprofile sowie das Auftreten der *Hot/Cold Spots,* alles begründet in der Darreichungsform des Katalysators. Deshalb findet die Beschichtung mikrostrukturierter Reaktoren u.a. mit Hilfe des sog. *wash-coat-* (*slurry coating*) oder des Sol-Gel-Verfahrens, zur Bildung besonders dünner Katalysatorschichten mit Hilfe der Physical Vapor Deposition (PVD) oder der Chemical Vapor Deposition (CVD), der Nassimprägnierung oder -fällung statt (W. Ehrfeld, V. Hessel, H. Löwe, "Microreactors", WILEY-VCH Verlag, 2000). Alle Methoden zur Beschichtung basieren darauf, dass die Reaktionskanäle erst nach dem Fügen des Reaktors mit dem Katalysator beladen werden, im folgenden als *Post-coat* bezeichnet, d.h. der Katalysator wird erst nach vollständigem Abschluss der Reaktorfertigung, inklusive der Montage der Ein- und Auslassanschlüsse, in die Kanäle eingebracht. Die Viskosität der hierbei verwendeten Suspensionen und Emulsionen limitiert die minimal notwendigen Kanaldurchmesser der verwendeten Reaktoren, um eine Verstopfung der Kanäle zu vermeiden. Die Menge sowie die Verteilungshomogenität des aufgebrachten Katalysators können nach der Beschichtung nicht mehr zerstörungsfrei kontrolliert werden. Die Ein- und Ausgangsbereiche werden auf diese Weise ebenfalls mit dem Katalysator kontaminiert oder sogar vollflächig beschichtet, so dass Reaktionen vorzeitig bzw. weiterführend außerhalb des strukturierten Reaktorkerns stattfinden. Dies kann zu einer schlechteren Temperaturkontrolle und damit zu einer schlechteren Reaktionsführung, zu unerwünschten Nebenreaktionen und zu einem verringerten Umsatz und einer verringerten Selektivität führen. Die Vorteile der Mikrostrukturtechnologie gehen auf diese Weise weitestgehend verloren.

Auch weil für alle Fertigungsverfahren für mikrostrukturierte Reaktoren, die bisher hergestellt worden sind, Techniken zur abschließenden, nicht reversiblen Verbindung (Fügen) des Reaktors eingesetzt worden sind, bei denen der Katalysator zerstört oder stark in Mitleidenschaft gezogen würde, musste der Katalysator bislang nach Durchführung des Fügeprozesses in den Reaktor eingebracht werden. Als einzige Alternative hat sich angeboten, den Reaktor nicht zu fügen sondern zu verschrauben. Im Labormaßstab werden mikrostrukturierte Reaktoren eingesetzt, die aus einem massiven Gehäuse bestehen, in das lose gestapelte oder mechanisch geträgerte Folien mit dem Katalysator eingebracht werden. Diese Reaktoren werden üblicherweise durch mechanisches Verschrauben montiert. Ein Vorteil ist, dass die einzelnen Folien ohne Zerstörung des Gehäuses leicht ausgetauscht werden können. Nachteile sind vor allem die Gefahr von Undichtigkeiten und ein damit verbundener möglicher Austritt von Gefahrstoffen sowie eine verschlechterte thermische Kopplung. Daher sind in derart gefügten Reaktoren Dichtungen notwendig, die den anwendbaren Temperaturbereich deutlich einschränken. Zusätzlich sind die thermische Kopplung und damit die Wärmeverteilung in vollmetallischen (nicht verschraubten) Reaktoren und damit die Prozesskontrolle deutlich besser.

Aus den genannten Gründen sind vielfältige Versuche unternommem worden, den Katalysator bereits vor dem Assemblieren in die Reaktionskanäle einzubringen. Ein derartiges Verfahren wird im Unterschied zum *post-coat* als *pre-coat* bezeichnet.

Das *pre-coat*-Verfahren zur Katalysatorbeladung eines Reaktors ermöglicht eine präzise Qualitätskontrolle der aufgebrachten Katalysatorschichten hinsichtlich Schichtdicke, Katalysatormenge, Homogenität und Ort der Aufbringung. Außerdem kann dadurch eine Kontamination der Ein- und Auslassbereiche mit dem Katalysator vermieden werden. Erstmals wird auch eine Beladung der Mikrostruktur mit temperatursensitivem Katalysator möglich, wenn ein geeigneter Fügeprozess eingesetzt wird. Dadurch wird ein großer Bereich der heterogenen Katalyseanwendungen für die Mikrostrukturtechnologie erschlossen. Voraussetzung für den Einsatz temperatursensitiver Katalysatoren ist eine der Temperaturstabilität des Katalysators angepasste Fügetemperatur, wobei gleichzeitig sichergestellt sein muss, dass der Reaktor für die Durchführung der chemischen Umsetzung eine ausreichende Temperaturstabilität aufweist.

Allerdings lassen alle derzeit in der Praxis bevorzugt angewendeten Fügeverfahren für mikrostrukturierte Reaktoren auf Grund ihrer Prozessbedingungen und/oder der verwendeten Zusatzstoffe (beispielsweise Flussmittel) ein *pre*-coat-Verfahren zur Katalysatoraufbringung nicht zu:

Das Diffusionsschweißen erfordert eine hohe Fügetemperatur (beispielsweise 1000°C), einen hohen Anpressdruck sowie ein gutes Vakuum während des Fügeprozesses. Durch ein gutes Vakuum soll eine Oxidbildung an den Oberflächen der zu fügenden Bauteile minimiert werden, da Oxidschichten den erfolgreichen Verbund erheblich beeinträchtigen würden. Weiterhin nachteilig bei diesem Verfahren ist eine lange Stand- und Prozesszeit. Die notwendige hohe Temperatur schließt die Anwendung des Diffusionsschweißens für den *pre-coat* temperatursensitiver Katalysatoren vollständig aus. Selbst ausgewiesene Hochtemperatur-Katalysatoren werden unter diesen Prozessbedingungen nach heutigem Kenntnisstand deaktiviert oder deren Aktivität erheblich beeinträchtigt.

In DE 198 25 102 C2 wird ein Verfahren zur Herstellung eines kompakten katalytischen Reaktors beschrieben. Dieses Verfahren umfasst eine Katalysatoraufbringung vor *dem Fügeprozess* und den Lötprozess zum Fügen des Bauteils. Im Unterschied zu dem erfindungsgemäßen Verfahren wird in DE 198 25 102 C2 die Fügeschicht weder in den Durchführungen noch auf den Stegen aufgebracht. Der fehlende Verbund über die Stege führt zu einer schlechteren thermischen Kopplung der einzelnen Reaktorlagen insgesamt. Die unterbrochene Wärmeleitung zwischen den Reaktorlagen verhindert eine Isothermie, einen wichtigen, verfahrenstechnischen Vorteil in vollmetallischen Mikrostrukturkomponenten, und führt damit zu einer verminderten Temperaturkontrolle der Reaktionen innerhalb des Reaktors. Hinzu kommen mögliche Querundichtigkeiten zwischen den einzelnen Durchführungen, die zu ungewollten Durchmischungen und Reaktionen führen. Dies kann auf Kosten der Selektivitäten und Ausbeuten geschehen. Um die Dichtigkeit nach außen zu gewährleisten, werden vor dem Aufeinanderstapeln der einzelnen Reaktorlagen die Ränder lediglich umgeknickt. Dies ist notwendig, da der in DE 198 25 102 C2 beschriebene Fügeprozess mit Hilfe von Lotfolien keinen gasdichten Verbund sicherstellt. Die Verwendung von Lotfolien kann außerdem zu einer Verstopfung der Durchführungen führen.

Klebeverbindungen erfüllen die Anforderung der Temperaturbeständigkeit nicht ausreichend und beeinträchtigen die thermische Leitfähigkeit der Bauteile maßgeblich. Darüber hinaus finden Wechselwirkungen zwischen Zusatzstoffen, Lösungsmitteln oder der Klebeverbindung selbst mit den verwendeten Katalysatoren statt. Weiterhin ist die Gefahr der Verstopfung der Kanäle durch inhomogenen Auftrag eines Klebemittels sehr hoch.

Weichlöten als thermisches Fügeverfahren im Vakuum oder in Inertgasatmosphäre wird großtechnisch eingesetzt. Die hierbei verwendeten Lotfolien oder Lotpasten führen jedoch bei Verwendung der Mikrostruktur zu einer Verstopfung der Kanäle und sind daher nicht für den Einsatz innerhalb eines Fügeverfahrens von Mikrostrukturbauteilen geeignet. Ferner kann der Zusatz von Flussmitteln durch dessen Anreicherung im Lotspalt der Mikrokanäle zur Korrosion führen, ein zu kurzes Temperaturprofil oder falsche chemische Zusammensetzung des Flussmittels ruft Lunkerbildung hervor und bedeutet überdies eine hohe Umweltbelastung, die nur durch aufwändige und kostenintensive Abwasser- und Abluftreinigung minimiert werden kann. Darüber hinaus kann es zu unerwünschten Reaktionen zwischen dem Flussmittel und Legierungszusätzen des Grundmaterials kommen, die den erfolgreichen Verbund verhindern. Bei der Herstellung katalytisch beschichteter Reaktoren kann die Verwendung von Flussmitteln zur Deaktivierung des Katalysators führen.

Ein mikrostrukturiertes Bauteil soll neben den vorgenannten Vorteilen bezüglich der Reaktionssteuerung und der hohen Sicherheitsstandards die folgenden wichtigen technischen Anforderungen erfüllen:

1. ausreichende Dichtigkeit, sowohl zwischen den Kanälen als auch zur Umgebung;
2. ausreichende Druckbeständigkeit bzw. Festigkeit;
3. ausreichende Korrosionsbeständigkeit gegenüber den verwendeten Medien;
4. ausreichende Temperaturbeständigkeit;
5. freie, geometrisch homogene Fluidkanäle.

Die wichtigsten Anforderungen an das Herstellungsverfahren lassen sich wie folgt zusammenfassen:

1. hohe Flexibilität und Anpassungsfähigkeit an das Gesamtsystem bzw. die Peripheriegeometrien;
2. hohe Flexibilität im Auslegungsdesign entsprechend vorgegebener Spezifikation;
3. Skalierbarkeit auf kostengünstige industrielle Massenfertigung;
4. das Fügeverfahren muss die Möglichkeit des *pre-coat* zulassen;
5. die Aktivität der Katalysatoren darf nicht beeinträchtigt werden.

Bis jetzt gibt es kein kostengünstiges, für den industriellen Maßstab geeignetes Fertigungsverfahren zur Herstellung katalytisch beschichteter Mikroreaktoren für Niedrig- und Hochtemperaturanwendungen, das all diesen Anforderungen genügt. Bisher sind mikrostrukturierte Reaktoren fast ausschließlich zur Durchführung nicht katalytischer Reaktionen eingesetzt worden, da es in Abstimmung auf das Fertigungsverfahren des Gesamtbauteils keine überzeugende Technik zur Beschichtung der Kanäle gab.

Ein schonendes Verfahren zum Verbinden von zur Herstellung von Mikrostrukturbauteilen geeigneten mikrostrukturierten Bauteillagen ist in EP 1 415 748 A2 beschrieben. Als Fügeverfahren wird unter anderem das Schmelzdiffusionsverfahren genannt. Darunter ist ein Lötverfahren zu verstehen, bei dem mehrere Elemente des Lotes interdiffundieren und dabei intermetallische Phasen bilden. Beispielsweise kann die Zusammensetzung und Dicke von Lotteilschichten so aufeinander abgestimmt werden, dass sich beim Fügevorgang ein initiales Eutektikum bildet. Somit wird anfänglich eine sehr niedrige Schmelztemperatur erreicht. Durch Interdiffusion der Elemente des Lotes zwischen verschiedenen Lotteilschichten verschiebt sich der Schmelzpunkt während des Lötprozesses nach und nach zu einem höheren Wert. Durch Tempern der Fügeverbindung wird bei diesem Verfahren also allmählich eine feste Lötverbindung mit einem Schmelzpunkt erhalten, der wesentlich höher liegt als der sich anfänglich beim Aufschmelzen der Lotschicht einstellende Schmelzpunkt. Dadurch kann insgesamt mit einer sehr niedrigen Löttemperatur gearbeitet werden. Insbesondere dadurch wird eine sehr schonende Behandlung der einzelnen Bauteillagen erreicht, so dass ein Verzug der einzelnen Lagen durch thermische Belastung praktisch auszuschließen ist.

Weiterhin ist in EP 1 198 344 B1 ein Verfahren zum Herstellen von Mikrobauteilen angegeben, bei dem ein Katalysator bereits vor dem Fügen einzelner Bauteillagen auf die Kanalwände aufgebracht wird. Gemäß diesem Dokument werden zunächst Kanäle gebildet. Hierzu wird beispielsweise eine Kupferfolie mit einer strukturierenden Abdeckschicht (Fotoresist-, Siebdrucklackschicht, perforierte Folie oder Metallresistschicht) überzogen. Die Kanalbereiche werden dabei freigelassen oder freigelegt. An den freiliegenden Stellen wird die Kupferfolie geätzt, beispielsweise mit einer $FeCl_3$/HCl-Lösung, so dass sich in diesen Bereichen Vertiefungen bilden, die den zu bildenden Kanälen entsprechen. Anschließend wird Katalysator ausschließlich auf den Wänden der Kanäle gebildet. Danach wird der Katalysator in den Kanälen mit einer weiteren Abdeckschicht überzogen. Im Anschluss daran wird die Abdeckschicht selektiv entfernt. In den freiliegenden Bereichen kann dann eine Fügeschicht abgeschieden werden. Nach dem Entfernen der Abdeckschicht aus den Kanälen werden mehrere derartig hergestellter Lagen durch Löten miteinander verbunden. Es hat sich herausgestellt, dass die Wirksamkeit des Katalysators beim Herstellverfahren erheblich verringert oder sogar vollständig beseitigt wird.

Von daher liegt der vorliegenden Erfindung die Aufgabe zugrunde, die Nachteile der bekannten Verfahren zu beheben und insbesondere ein Herstellverfahren für mikrostrukturierte Reaktoren zu finden, das, abgestimmt auf die technischen Anforderungen und das Fertigungsverfahren, die Herstellung mikrostrukturierter Reaktoren ermöglicht, die mit einem Katalysator beladen sind. Mikrostrukturierte Reaktoren können auf diese Weise auch in heterogen katalysierten Reaktionen eingesetzt werden. Darüber hinaus soll das Herstellungsverfahren die Möglichkeit einer kostengünstigen industriellen Umsetzung zur Herstellung von mikrostrukturierten Bauteilen bieten. Schließlich soll auch ein Verfahren zur Herstellung von mikrostrukturierten Reaktoren gefunden werden, die als Reformer von Kohlenwasserstoffen und Alkoholen, insbesondere als Methan- und als Methanolreformer, einsetzbar sind. Die hergestellten Reaktoren sollen klein, leicht, kompakt und damit insbesondere vielfältig sowie vor allem in mobilen Anwendungen einsetzbar sein. Das Herstellverfahren soll automatisierbar und skalierbar sein. Schließlich sollen mit dem Verfahren Reaktoren herstellbar sein, die ein hohes WHSV (weight hourly spatial velocity: Menge an umgesetztem Material [g] in dem Reaktor pro Masse des Katalysators [g] x Betriebsdauer des Reaktors [h]) aufweisen.

Diese Aufgabe wird gelöst durch das Verfahren nach Anspruch 1 und die Verwendung eines nach dem Verfahren hergestellten mikrostrukturierten Reaktors nach Anspruch 23. Bevorzugte Ausführungsformen der Erfindung sind in den Unteransprüchen angegeben.

Das erfindungsgemäße Verfahren dient zur Herstellung von mikrostrukturierten Reaktoren, die aus mikro- oder millistrukturierten Bauteil- (Reaktor-)lagen, insbesondere Blechen, bestehen und die mit Katalysator beladene Durchführungen, insbesondere Kanäle, aufweisen. Der Reaktor wird vorzugsweise zur Durchführung katalysierter Reaktionen verwendet.

Der mit dem erfindungsgemäßen Verfahren hergestellte mikrostrukturierte Reaktor kann insbesondere bei der Kohlenwasserstoff-, insbesondere Methan-, und der Alkohol-, insbesondere Methanolreformierung eingesetzt werden. Bei diesen Verfahren kann hochreines Wasserstoffgas bzw. hochreines Synthesegas hergestellt werden.

Die Durchführungen im microstrukturierten Reaktor sind im *pre-coat*-Verfahren mit einem Katalysator beladen. Hierzu wird ein Verfahren mit folgenden Verfahrensschritten eingesetzt:

a. Herstellen der Reaktorlagen; die Reaktorlagen weisen Fügebereiche, über die mehrere Reaktorlagen miteinander gefügt werden, Durchführungsbereiche, in denen die Durchführungen gebildet werden, sowie gegebenenfalls noch andere Bereiche, beispielsweise Bereiche zur Aufnahme elektrischer Bauelemente, auf;
b. Aufbringen mindestens einer Fügeschicht auf die Reaktorlagen in den Fügebereichen,
c. Beladen der Reaktorlagen in den Durchführungsbereichen mit dem Katalysator und
d. Fügen der Reaktorlagen.

Erfindungsgemäß wird die Fügeschicht aufgebracht, bevor die Reaktorlagen mit dem Katalysator beladen werden. Bestandteil der Fügeschicht kann eine Lotschicht oder eine Fügehilfsschicht sein. Die Lotschicht ist nach DIN 8505 dadurch gekennzeichnet, dass sie während des Lötens aufschmilzt und den Grundwerkstoff benetzt. Die Arbeitstemperatur liegt oberhalb der Schmelztemperatur der Lotschicht, wobei die Lotschicht aus einer oder mehreren chemischen Elementen bestehen kann. Die Fügehilfsschicht ist dadurch gekennzeichnet, dass diese während des Fügeprozesses nicht aufschmilzt, d.h. dass die Arbeitstemperatur unterhalb ihres Schmelzpunktes gewählt ist.

Vor dem Beladen der Reaktorlagen mit dem Katalysator wird die Fügeschicht in den Fügebereichen maskiert. Dadurch kann der Katalysator mit der Fügeschicht nicht in Kontakt kommen. Die für die Maskierung verwendete Maske wird vor dem Fügen und nach dem Beladen der Reaktorlagen mit dem Katalysator wieder entfernt.

Indem zuerst die Fügeschicht aufgebracht und erst danach die Reaktorlagen mit dem Katalysator beladen werden, kann der Katalysator von den Verfahrensschritten, die zum Bilden der Fügeschicht erforderlich sind, völlig unbeeinflusst bleiben. Der Fall, in dem die Fügeschicht erst nach dem Beladen der Reaktorlagen mit dem Katalysator gebildet wird, hat sich als nachteilig herausgestellt: Für diesen Fall müsste vorgesehen werden, dass der Katalysator in den Durchführungsbereichen abgedeckt wird, damit die Fügeschicht nicht auf den Katalysator gelangt. Allerdings hat sich in Versuchen herausgestellt, dass die Aktivität des Katalysators durch ein Verfahren, mit dem dieser mit einem Lack oder irgendeiner anderen Abdeckung überzogen wird, maßgeblich beeinflusst, im ungünstigeren Falle beeinträchtigt oder dessen Wirksamkeit sogar beseitigt wird. Der nachteilige Einfluss auf die Aktivität des Katalysators kann in einem derartigen Falle beispielsweise durch die Chemikalien hervorgerufen werden, die verwendet werden, um den Lack oder die andere Abdeckung vom Katalysator wieder zu entfernen. Daher werden die Reaktorlagen erst nach dem Aufbringen der Fügeschicht mit dem Katalysator beladen. Möglichst unmittelbar nach der Beladung mit dem Katalysator können die Reaktorlagen nach entfernen des Resists oder Schutzlackes gestapelt und gefügt werden.

Es hat sich ferner herausgestellt, dass es zur Gewährleistung einer ordnungsgemäßen Verbindung der einzelnen Bauteillagen miteinander, so dass der mikrostrukturierte Reaktor auch im industriellen Maßstab fluiddicht und gegenüber Korrosion beständig herstellbar ist, vorteilhaft ist sicherzustellen, dass auch die Fügeschicht durch den Katalysator nicht beeinträchtigt wird. EP 1 198 344 gibt hierzu an, dass Katalysatorschichten zu diesem Zwecke ausschließlich auf den Wänden der Kanäle gebildet werden sollen. Um dies zu bewerkstelligen, wird gemäß diesem Dokument zuerst die Katalysatorschicht in den Kanälen gebildet und die Bereiche auf den Reaktorlagen danach selektiv von der zuvor aufgebrachten Abdeckschicht befreit, die sich in den Fügebereichen befindet, um dort die Fügeschicht zu bilden. Das in diesem Dokument angegebene Verfahren ist, wie zuvor angegeben, jedoch nicht geeignet, auch die Aktivität des Katalysators unbeeinflusst zu erhalten. Erst indem die Fügeschicht gemäß dem erfindungsgemäßen Verfahren bereits vor dem Beladen der Reaktorlagen mit dem Katalysator gebildet und mit einer Abdeckmaske maskiert wird, kann vermieden werden, dass einerseits die Wirksamkeit des Katalysators beeinträchtigt wird und der Katalysator andererseits auf die Fügeschicht gelangt. Im Anschluss an die Beladung der Reaktorlagen mit dem Katalysator kann die Abdeckmaske nasschemisch oder trocken von der Fügeschicht wieder entfernt werden.

In einer bevorzugten Ausführungsform wird die mindestens eine Fügeschicht ausschließlich in den Fügebereichen oder vollflächig auf die Reaktorlagen aufgebracht. Im ersteren Falle werden die Durchführungsbereiche von der Fügeschicht freigehalten, während die Durchführungsbereiche bei vollflächiger Aufbringung der Fügeschicht auf die Reaktorlagen ebenfalls mit der Fügeschicht überzogen werden, so dass der Katalysator in diesem Falle auf die Fügeschicht aufgebracht wird. Die Fügeschicht kann in diesem Falle beispielsweise als Barriereschicht oder als Haftvermittler zwischen Katalysator und dem Material der Reaktorlage dienen.

In den Durchführungsbereichen auf den Reaktorlagen werden vorzugsweise Vertiefungen in den Lagen gebildet. Alternativ können Vertiefungen auch durch Metallaufbau auf den Reaktorlagen gebildet werden. Diese bilden nach dem Stapeln und Fügen der Lagen die Durchführungen im mikrostrukturierten Reaktor. Diese Vertiefungen in den Reaktorlagen können entweder vor oder nach dem Aufbringen der Fügeschicht gebildet werden. Die Vertiefungen werden danach mit dem Katalysator beladen. Werden die Vertiefungen erst nach dem Aufbringen der Fügeschicht in den Reaktorlagen gebildet, müssen sie durch die Fügeschicht hindurch gebildet werden, wenn die Fügeschicht ganzflächig auf die Reaktorlagen aufgebracht worden ist. Dazu ist es erforderlich, dass die Fügeschicht mit demselben Verfahren abgetragen werden kann wie das Grundmaterial, aus dem die Reaktorlagen bestehen. Bei dieser Verfahrensvariante genügt es, sowohl für die Bildung der Vertiefungen als auch für das Aufbringen der Fügeschicht nur ein einziges Strukturierungsverfahren anzuwenden, beispielsweise mit Hilfe einer einzigen Metallmaske. Wird die Fügeschicht in diesem Falle jedoch nur in den Fügebereichen auf die Reaktorlagen aufgebracht, kann die Fügeschicht auch als Ätzschutz beim nachfolgenden Bilden der Vertiefungen dienen, so dass auch in diesem Falle kein weiteres Strukturierungsverfahren eingesetzt werden muss. Andererseits können die Vertiefungen auch bereits vor dem Aufbringen der Fügeschicht gebildet werden. Allerdings sind in diesem Falle zwei verschiedene Strukturierungsverfahren für die Bildung der Vertiefungen und für das Aufbringen der Fügeschicht anzuwenden, da diese beiden Schritte separat voneinander durchgeführt werden. Dies ist allerdings nur dann erforderlich, wenn die Fügeschicht ausschließlich in den Fügebereichen auf die Reaktorlagen aufgebracht werden soll. Falls die Fügeschicht dagegen ganzflächig auf die Reaktorlagen aufgebracht werden soll, nachdem die Vertiefungen bereits gebildet worden sind, also auch in die Vertiefungen, bedarf es keiner weiteren Strukturierung der Fügeschicht. In letzterem Falle kann die Fügeschicht bei geeigneter Auswahl auch zur Haftvermittlung zwischen dem Katalysator und dem Grundmaterial, aus dem die Reaktorlagen bestehen, dienen.

Der Katalysator kann u.a. durch folgende Methoden in die Mikrokanäle gebracht werden: Streichen, Rakeln, Spritzen, Wischen, Siebdruck, Dispensen oder ähnliche Auftragungstechniken selektiv (d.h. ausschließlich in bestimmten Bereichen auf den Reaktorlagen) oder vollflächig. Der Katalysator wird vorzugsweise im *wash-coat*-Verfahren auf die Reaktorlagen aufgebracht. Das *wash-coat*-Verfahren ist allgemein bekannt. Es umfasst die Herstellung einer Aufschlämmung des Katalysators in einer Flüssigkeit, beispielsweise in Wasser oder Alkohol, und das In-Kontakt-Bringen der Reaktorlagen mit der Aufschlämmung. Die Aufschlämmung enthält mindestens einen Katalysatorträger oder dessen Ausgangsmaterial, mindestens ein katalytisches Metall oder dessen Ausgangsmaterial sowie Dispersionsmittel und andere Additive. Der Katalysatorträger kann beispielsweise ein Zeolith, Titandioxid, Zirkondioxid, Zinkoxid, Oxid der Seltenen Erden, ein Spinell, Aluminiumoxid oder Mischoxid sein. Das katalytische Metall kann beispielsweise ein Metall der VIII. oder I. Nebengruppe des Periodensystems der Elemente, also Fe, Co, Ni, Ru, Rh, Pd, Os, Ir, Pt, Cu, Ag, Au, oder eine Mischung aus diesen Elementen sein. Meist können die Katalysatoren aus drei Komponenten bestehen: aus einem inerten Träger ($Al_2O_3$, $TiO_2$, $ZrO_2$ und anderen ähnlichen Oxiden), einem Promotor ($ZnO$, $CeO_2$ und anderen ähnlichen Oxiden), der ebenfalls dem Katalysatorträger zuzurechnen ist, und der katalytisch aktiven Spezies (meist Cu oder Pd). Bereiche der Reaktorlagen, die nicht katalytisch beschichtet werden sollen oder dürfen, insbesondere - wie oben angegeben - die Fügebereiche, werden entweder durch entsprechende Abdeckungen, beispielsweise mit Hilfe von Abdeckstreifen, Schutzlacken, Abdeckvorrichtungen mit Dichtungen, Resisten oder dergleichen, geschützt (maskiert) oder können mechanisch, beispielsweise durch Abwischen oder Schleifen, gereinigt werden. Letztere Verfahren sind jedoch für eine Herstellung im industriellen Maßstab nicht geeignet, weil beim selektiven mechanischen Entfernen des Katalysators von den Fügebereichen jeweils die Gefahr besteht, dass Katalysator auch zumindest partiell aus den Vertiefungen entfernt wird. Gleichzeitig muss aber gewährleistet sein, dass der Katalysator von den Fügebereichen restlos entfernt wird. Der späteren Funktion des Reaktors entsprechend können auf verschiedene strukturierte Reaktorlagen unterschiedliche Katalysatoren aufgetragen werden und somit beispielsweise endotherme und exotherme Reaktionen in einem Reaktor miteinander kombiniert werden. Nach dem Beladen der Reaktorlagen mit dem Katalysator wird die Abdeckung in den Fügebereichen wieder entfernt.

Die mit dem *wash-coat*-Verfahren aufgebrachte Aufschlämmung des Katalysators wird schließlich vorzugsweise unterhalb der Löttemperatur getrocknet und danach kalziniert, damit die für den Katalysator günstige poröse Struktur des Katalysatorträgers mit einer möglichst großen inneren Oberfläche und frei zugänglichen katalytischen Zentren entsteht. Die Aufschlämmung wird vorzugsweise noch vor dem Fügen der Reaktorlagen getrocknet. In trockenem Zustand sollte die *wash-coat*-Schicht in den Vertiefungen fest haften. Die getrocknete Katalysatoraufschlämmung kann vorzugsweise beim Fügen der Reaktorlagen kalziniert werden, denn bei der beim Fügen angewendeten Temperatur entweichen in der getrockneten Aufschlämmung noch enthaltenes Lösungsmittel und Additive. Dabei bildet sich die gewünschte poröse Katalysatorstruktur. Der Katalysator kann dadurch, dass er im *pre-coat*-Verfahren aufgebracht wird, charakterisiert und seine Schichtdicke und die Homogenität der Verteilung in den Vertiefungen vor der Weiterverarbeitung untersucht und bestimmt werden.

Das mit dem erfindungsgemäßen Verfahren hergestellte mikro- oder millistrukturierte Bauteil kann aus metallischen, keramischen oder Polymer-Grundmaterialien bestehen. Bauteile, in denen die Reaktorlagen aus Metall bestehen, sind bevorzugt, beispielsweise Bauteile aus Aluminium, Stahl, vorzugsweise Edelstahl, Nickel, insbesondere Nickel-Superlegierungen, d.h. Nickel-Basislegierungen mit einem Nickelanteil von mindestens 28 Gew.-%, Titan, Kupfer, Tantal und aus Legierungen dieser Metalle miteinander und mit anderen Metallen und Halbmetallen. Beispielsweise sind Aluminiumlegierungen mit Silizium, Nickellegierungen mit Chrom und Nickel und Edelstähle, die mit Aluminium legiert sind, besonders gut geeignet. Ferner können die Reaktorlagen auch aus Silizium bestehen, wobei beispielsweise eine Glasscheibe als Deckel verwendet werden kann. Als Keramik kommt insbesondere $\alpha$-Al$_2$O$_3$ in Frage.

Vor der Beladung der Reaktorlagen in den Durchführungsbereichen mit dem Katalysator kann eine Schicht aus einem Oxidmaterial in den Durchführungsbereichen gebildet werden. Dieses Oxidmaterial vermittelt insbesondere den Kontakt zwischen dem Katalysator und der Reaktorlage, so dass der Katalysator in den Vertiefungen haftfest gebunden wird. Derartige Oxidzwischenschichten sind besonders dann geeignet, wenn das Grundmaterial, aus dem die Reaktorlagen bestehen, ein Oxid ist oder eine Oxidoberfläche bildet, wie Aluminium und dessen Legierungen. Ein besonders günstiges Oxidmaterial ist ausgewählt aus der Gruppe, umfassend Aluminiumoxid, Silica und Silkate, Alumosilikate, Titandioxid und Zirkoniumdioxid.

Verfahren zur Herstellung der Vertiefungen sind beispielsweise in DE 197 08 472 C2 beschrieben. Danach können insbesondere Verfahren eingesetzt werden, die auch aus der Leiterplattenherstellung bekannt sind (Subtraktiv-, Semiadditiv-, Additivverfahren). Derartige Verfahren sind insbesondere galvanotechnische Verfahren und chemische Ätzverfahren. Entsprechend DE 197 08 472 C2 können die Vertiefungen gemäß dem Subtraktivverfahren beispielsweise mit folgenden Verfahrensschritten gebildet werden: a) Bilden von Fluidkanalstrukturen auf Metalloberflächen der Reaktorlage mittels einer Fotoresist-, Siebdrucklackschicht oder irgendeiner anderen Abdeckschicht, die die Reaktorlagen in den Durchführungsbereichen freilässt, und b) zumindest teilweises stromloses und/oder elektrochemisches Abätzen von Metall von den freiliegenden Flächen der Reaktorlagen. Durch das Abätzen von Metall werden die Vertiefungen erzeugt. Gemäß einer anderen Verfahrensvariante des Subtraktivverfahrens können die Vertiefungen nach Verfahrensschritt a) des zuvor beschriebenen Verfahrens mit folgenden weiteren Verfahrensschritten gebildet werden: b) stromloses und/oder elektrochemisches Abscheiden einer ätzresistenten Metallschicht auf die freiliegenden Oberflächen der Reaktorlagen, c) vollständiges Entfernen der Abdeckschicht und d) zumindest teilweises stromloses und/oder elektrochemisches Abätzen des Metalls der Reaktorlagen unter Bildung der Vertiefungen. In diesem Falle wird die Abdeckschicht so strukturiert, dass sie die Durchführungsbereiche auf den Reaktorlagen gerade nicht freilässt sondern abdeckt und vielmehr die Fügebereiche freilässt. Gemäß dem Additivverfahren können die Vertiefungen nach Verfahrensschritt a) des Subtraktivverfahrens mit folgendem weiteren Verfahrensschritt gebildet werden: b) Abscheiden einer Metallschicht auf den freiliegenden Oberflächen der Reaktorlagen. In diesem Falle werden die Stege zwischen den Vertiefungen durch Metallabscheiden erzeugt. Dazu muss die Abdeckschicht die Bereiche auf den Reaktorlagen freilassen, die gerade nicht den Durchführungsbereichen entsprechen sondern vielmehr die Fügebereiche. Im Anschluss an die Bildung der Vertiefungen kann die Abdeckschicht jeweils wieder entfernt werden. Bei Verwendung eines Fotoresists wird dieser vollflächig auf die Reaktorlage aufgebracht, je nach Verfahren mit dem Negativ- oder Positivbild der Vertiefungen belichtet und anschließend entwickelt, so dass Teile der Reaktorlagen freigelegt werden.

Die bei diesen Verfahren verwendete Maskentechnik ermöglicht eine hohe Flexibilität in der fertigungstechnischen Umsetzung neuer Designs sowie eine rasche Designanpassung an kurzfristig geänderte Anforderungsprofile. Die Strukturierung kann aber auch mechanisch, über Fräsen, Prägen, Stanzen, Funkenerosion, Laserablation, Trockenätzverfahren, mit mechanischer Mikrofertigung etc. erfolgen. Für die Reaktorlagen verwendete Bleche oder andere Folien können hierbei wahlweise ein- oder beidseitig strukturiert werden.

Nach Erzeugung der Mikrostruktur wird eine funktionale Schicht als Füge- und/oder Korrosionsschutzschicht, bestehend aus einer oder mehreren Einzellagen, durch örtlich selektive oder vollflächige elektrochemische oder chemische Abscheidung aufgebaut. Bei der lokalen Abscheidung der Fügeschicht werden die Bereiche des Substrates, die nicht mit der Fügeschicht beschichtet werden sollen oder dürfen, durch entsprechende Abdeckungen, beispielsweise mit Hilfe von Abdeckstreifen, Schutzlacken, Abdeckvorrichtungen mit Dichtungen, Resisten und dergleichen, geschützt. Zur selektiven Aufbringung der Fügeschicht in den Fügebereichen wird vorzugsweise ein Fotoresist oder eine elektrisch nicht leitfähige Beschichtung in den Kanälen gewählt. Wird das Lot nicht lediglich lokal abgeschieden, sondern ganzflächig und somit auch in den Durchführungsbereichen, wird der Katalysator in einem weiteren Verfahrensschritt in den Durchführungsbereichen auf die Fügeschicht aufgebracht.

In Abhängigkeit von dem zu verwendenden Grundmaterial, aus dem die Reaktorlagen bestehen, dem Katalysatormaterial und dem Anwendungszweck des mikrostruturierten Reaktors lassen sich grundsätzlich zwei Fügevarianten unterscheiden: zum einen das Löten in einem bevorzugten Temperaturbereich von 100 bis 450°C (Weichlöten) und zum anderen das Löten in einem bevorzugten Temperaturbereich von 450 bis 1400°C (Hartlöten).

Die Fügeschicht wird aus Lagen mit verschiedener Zusammensetzung durch lokale oder vollflächige galvanische oder chemische Abscheidung aufgebaut. Vor der Abscheidung werden die mikrostrukturierten Reaktorlagen, vorzugsweise Bleche aus Kupfer, Tantal, Aluminium, Stahl, vorzugsweise Edelstahl, Nickel, insbesondere Nickel-Superlegierungen, d.h. Nickel-Basislegierungen mit einem Nickelanteil von mindestens 28 Gew.-%, Titan und aus Legierungen dieser Metalle miteinander und mit anderen Metallen und Halbmetallen, zunächst durch eine geeignete chemische Vorbehandlung, die aus Entfettung und Beizschritten besteht, von Verunreinigungen und Oberflächenoxiden gereinigt.

Die Fügeschicht wird in einer ersten bevorzugten Ausführungsform aus mindestens einer hoch schmelzenden und mindestens einer niedrig schmelzenden Lotteilschicht gebildet. Die Elementkombination der hoch schmelzenden mit der niedrig schmelzenden Lotteilschicht kann insbesondere unter Berücksichtigung der Stöchiometrie gewünschter intermetallischer Phasen gewählt werden, die sich während des Fügeprozesses bilden sollen. Unter Wärmeeintrag und Druckaufbringung kann sich in diesem Falle zunächst ein initiales Eutektikum bilden und ein Löten bei tieferer Temperatur ermöglichen, als es der Aufschmelztemperatur der Lotnaht nach Abschluss des Fügeprozesses entspricht. Der Fügeprozess ermöglicht damit durch entsprechende Wahl bzw. Zusammensetzung des Lotsystems und der Lötparameter ein Fügen unterhalb der maximalen Toleranztemperatur des Katalysators, so dass dessen thermische irreversible Deaktivierung verhindert und gleichzeitig die Temperaturstabilität der Fügenaht bei der späteren Betriebstemperatur des mikrostrukturierten Reaktors gewahrt wird.

Die mindestens eine hoch schmelzende Lotteilschicht besteht vorzugsweise aus einem Metall, ausgewählt aus der Gruppe, umfassend Silber, Gold, Nickel und Kupfer. Die mindestens eine niedrig schmelzende Lotteilschicht besteht vorzugsweise aus einem Metall, ausgewählt aus der Gruppe, umfassend Zinn, Indium und Wismut. In einer ganz besonders bevorzugten Ausführungsform bestehen die hoch schmelzende Lotteilschicht aus Silber und die niedrig schmelzende Lotteilschicht aus Zinn. Die Fügeschicht kann auf die Oberfläche nur eines Fügepartners oder auf die Oberflächen beider Fügepartner aufgebracht werden.

Weiterhin kann insbesondere beim Fügen im Niedrigtemperaturbereich (Weichlöten) eine multifunktionelle Barriereschicht, vorzugsweise eine Schicht aus Molybdän, Mangan, Eisen, Eisen/Phosphor-Legierung, Rhenium, Rhodium, Platin, Palladium, Nickel oder Nickel/Phosphor-Legierung, mit einer Dicke im Bereich von 1 bis 20 $\mu$m in den Fügebereichen direkt auf die Reaktorlagen aufgebracht werden, bevor die Fügeschicht aufgebracht wird. Diese Barriereschicht gleicht Unebenheiten an der Oberfläche der Reaktorlagen aus, bietet eine homogene Grundlage für die Abscheidung weiterer Schichten, einen effektiven Schutz vor Oxidbildung und ist eine Benetzungshilfe der schmelzflüssigen Phase während des Lötvorganges. Des Weiteren bildet sie unter Wärmeeintrag einen festen Verbund mit dem Grundmaterial der Reaktorlagen und bildet damit in der Funktion des Haftvermittlers die Grundlage für eine ausreichende Druckstabilität und Festigkeit des mikrostrukturierten Bauteils. Sie soll als Barriereschicht schließlich verhindern, dass Bestandteile aus der Fügeschicht in das Grundmaterial der Reaktorlagen und umgekehrt diffundieren. In der Folge könnten sowohl die schmelzflüssige Phase verarmen als auch unerwünschte Wechselwirkungen und/oder eine Sprödphasenbildung im Fügenahtbereich stattfinden. Dies könnte in bestimmten Fällen zu einer Beeinträchtigung des Verbundes führen. Gleiches gilt auch für Wechselwirkungen zwischen Bestandteilen des Grundmaterials mit dem Katalysator in den Durchführungen, falls die Barriereschicht auch in den Durchführungsbereichen aufgebracht wird. Die Barriereschicht kann insbesondere aus mindestens einem Metall, ausgewählt aus der Gruppe, umfassend Molybdän, Mangan, Chrom, Palladium, Eisen, Nickel und Legierungen von Eisen und/oder Nickel mit Phosphor, bestehen.

Als sehr günstige Ausführungsform hat sich eine Schichtenfolge von 5 $\mu$m Ni (Barriereschicht), 8 $\mu$m Ag (erste Lotteilschicht) und 3 $\mu$m Sn (zweite Lotteilschicht) herausgestellt.

Nach chemischer Aktivierung der bevorzugt aufgebrachten multifunktionalen Barriereschicht wird gemäß der ersten bevorzugten Ausführungsform die Schicht des höher schmelzenden Metalls in einer bevorzugten Schichtdicke im Bereich von 1 bis 20 $\mu$m und anschließend ebenfalls nach einem Aktivierungsschritt das niedrig schmelzende Metall mit einer Schichtdicke im Bereich von 1 bis 10 $\mu$m aufgebracht.

Ist im Einzelfall die Verwendung der multifunktionalen Barriereschicht nicht notwendig, so kann die Fügeschicht nach Vorbehandlung und chemischer Aktivierung des Grundmaterials der Reaktorlagen durch lokale oder vollflächige chemische oder galvanische Abscheidung direkt aufgebaut werden.

Die ein- oder beidseitig mikrostrukturierten lot- und katalysatorbeschichteten Reaktorlagen werden dann so übereinander gelegt, dass ein Stapel benachbarter Lagen entsteht, zwischen denen sich das Fügematerial befindet. Falls eine multifunktionelle Barriereschicht verwendet wird, liegt das Lot ohne direkten Kontakt zum verwendeten Grundmaterial der Reaktorlagen räumlich begrenzt ("eingesperrt") durch die Barriereschichten vor. Durch eine geeignete Wahl des Lotsystems und der Lötparameter wird das *pre-coat*-Verfahren für die Katalysatoraufbringung ermöglicht. Abschließend wird der Stapel im Vakuum oder in Inertgasatmosphäre unter Wärmeeintrag und Druckaufbringung gefügt, vorzugsweise gelötet.

Gleichzeitig wird der Katalysator kalziniert. Weitere wichtige Prozessparameter sind neben der Löttemperatur und dem Anpressdruck auch die Vakuumgüte, Aufheizrate, Haltedauer und Abkühlzeit. Die genaue Kenntnis dieser Prozessparameter ist die Voraussetzung, die intermetallischen Reaktionen während des Lötvorganges zu steuern und gezielt zu beeinflussen.

Um einen gleichmäßigen, vollflächigen Verbund der einzelnen Reaktorlagen untereinander zu gewährleisten, muss ein Mindestdruck als Funktion der Temperatur und der Schichtdicke homogen verteilt auf den zu verlötenden Stapel ausgeübt werden. Neben der Verbesserung des Kontaktes der zu verlötenden Flächen untereinander und der damit verbundenen Verbesserung der Interdiffusion und somit der intermetallischen Phasenbildung kann ein Auftreten der Sprödphasenbildung durch den Anpressdruck günstig beeinflusst werden (DVS Berichte 132, DVS Verlag, 1990). Die Vermeidung von Sprödphasen ist für die spätere Festigkeit, Korrosionsbeständigkeit und Wärmeleitung mitentscheidend.

Um eine schonende Behandlung des Katalysators beim Fügen der Reaktorlagen zu ermöglichen, werden diese somit vorzugsweise mit einem Schmelzdiffusionsverfahren gefügt. Bei diesem Verfahren werden eine oder zwei Lotschichten zwischen den zu verbindenden Teilen erzeugt, und der Verbund wird auf eine Temperatur über den Schmelzpunkt des Lotmaterials hinaus erwärmt. Um eine Interdiffusion der Metalle des Lots und der Grundmaterialien der Reaktorlagen zu ermöglichen, wird der Verbund über einen längeren Zeitraum erwärmt. Falls zwei verschiedene Lotmetalle oder -legierungen verwendet werden, kann auch ein Eutektikum der beiden Metalle oder Legierungen gebildet werden. Dieses Schmelzdiffusionslötverfahren führt zu Lotnähten mit hoher Homogenität, Korrosionsstabilität und Festigkeit. Bei vollflächiger Abscheidung des Lotes kann die Zusammensetzung der intermetallischen Phase so gewählt werden, dass sie gleichzeitig auch innerhalb der Durchführungen korrosionsschützend wirkt.

In einer anderen bevorzugten Ausführungsform kann die Anordnung aus Reaktorlagen und dazwischen angeordneten Fügeschichten zum Fügen auf eine Temperatur unterhalb der Schmelztemperatur des Materials der Fügeschicht erwärmt werden. In diesem Falle kann die Fügeschicht nicht als Lotschicht betrachtet werden, weil Lotschichten nach allgemeinem Verständnis während des Fügens schmelzen und die Fügepartner benetzen. In diesem Falle handelt es sich bei der Fügeschicht um eine Fügehilfsschicht. Um auch in diesem Falle zu einem innigen Verbund zwischen den Reaktorlagen zu gelangen, enthält die Fügeschicht vorzugsweise ein Nichtmetall und/oder Halbmetall, ausgewählt aus der Gruppe, umfassend Phosphor, Bor und Kohlenstoff. Die Fügeschicht enthält in diesem Falle ferner vorzugsweise mindestens ein Übergangsmetall, ausgewählt aus der Gruppe, umfassend Silber, Kupfer, Gold, Palladium, Zink, Nickel, Eisen, Kobalt, Chrom und Mangan. Das Halbmetall- bzw. Nichtmetallelement sowie die Elemente des Grundmaterials interdiffundieren in einer Festkörperreaktion bis der Konzentrationsausgleich in der Fügezone stattgefunden hat. Dabei kann ein monolithisches Gefüge entstehen, d.h. in einem nach dem Fügeprozess angefertigten Querschliff der Fügezone kann keine Fügenaht mehr sichtbar gemacht werden.

Mit den vorgenannten Verfahrensvarianten wird eine schonende Behandlung der Reaktorlagen ermöglicht, da die Fügetemperatur so gering wie möglich gewählt werden kann. Mit den angegebenen Fügeverfahren werden Fügenähte mit hoher Homogenität, Korrosionsstabilität und Festigkeit erreicht. Im Idealfall wird ein monolithisches Gefüge gebildet, d.h. Fügenähte sind nach dem Fügen in einem Schliffbild auch nach geeigneter Präparation der Probe nicht mehr erkennbar. Die Dicke der abgeschiedenen Fügeschichten liegt vorzugsweise im Bereich von 0,2 bis 100 μm, vorzugsweise im Bereich von 1 bis 40 μm. Durch eine kontrollierte Menge an schmelzflüssiger Phase wird gewährleistet, dass die Durchführungen nicht durch das Lot verschlossen werden. Im Falle eines Fügeverfahrens, bei dem die Fügetemperatur unterhalb der Schmelztemperatur des Fügematerials eingestellt wird, kann ohnehin keine Verstopfung der Kanäle mit Fügematerial stattfinden.

Ein Fügeprozess im Temperaturbereich von 450 bis 1400°C bietet für Anwendungen im Hochtemperaturbereich chemischer Reaktionen ebenfalls die Möglichkeit zur Reaktorfertigung mit einer Katalysatorbeschichtung im *pre-coat*-Verfahren. Bei Anwendungen mit besonders hohen Anforderungen an die Form- und Druckstabilität des mikrostrukturierten Reaktors kann dies ebenfalls durch das erfindungsgemäße Verfahren gewährleistet werden. Auch beim Hartlöten kann mit Barriereschichten gearbeitet werden, die ein analog dem Weichlöten beschriebenes Verfahren und damit eine niedrigere Fügetemperatur verbunden mit einer anschließend erhöhten Wiederaufschmelztemperatur ermöglichen.

Die Fügeschicht wird vorzugsweise aus ein bis drei Lagen aufgebaut, wobei die Element- und/oder Legierungskombinationen nicht notwendigerweise im Mengenverhältnis eines gewünschten eutektischen Mischungsverhältnisses gewählt werden. Der schematische Prozessablauf unterscheidet sich bei Anwendung des Hart-/Hochtemperaturlötens nicht wesentlich von dem Verfahren des Weichlötens.

Sollte der Katalysator mit Elementen des Grundmaterials der Reaktorlagen potenziell negativ in Wechselwirkung treten, so kann eine Diffusionsbarriere zumindest in den Durchführungsbereichen gebildet werden. Diese Barriere kann beispielsweise aus Nickel, Nickel/Phosphor-Legierung, Eisen/Phosphor-Legierung, Gold, Rhenium, Rhodium, Platin und Palladium bestehen. Falls die Barriere- und die Fügeschicht ganzflächig abgeschieden werden, wird das Lotsystem anschließend auf der Diffusionsbarriere abgeschieden. Ansonsten kann auf eine Diffusionsbarriere auch verzichtet werden. Die Fügeschicht kann insbesondere aus Silber, Kupfer, Eisen/Phosphor-Legierungen, Nickel/Phosphor-Legierungen, Nickel/Bor-Legierungen, Nickel/ Kohlenstoff-Legierungen, Kohlenstoff, Kobalt, Gold, Palladium, Mangan, Chrom und Zink bestehen. Die Gesamtschichtdicke der Fügeschicht liegt vorzugsweise im Bereich von 1 bis 40 $\mu$m, vorzugsweise im Bereich von 1 bis 10 $\mu$m. Durch diese Dicke wird gewährleistet, dass die Durchführungen nicht durch das Lot verschlossen werden und ein sehr hoher Wärmeübergang gewährleistet bleibt. Bei vollflächiger Abscheidung des Lotes kann die Zusammensetzung des Lotes so gewählt werden, dass es gleichzeitig auch innerhalb der Durchführungen korrosionsschützend wirkt. Der Druck muss so aufgebracht werden, dass eine exakte Fixierung des Stapels aus Reaktorlagen und ein vollflächiger Kontakt zwischen den Lagen gewährleistet ist.

Die Anschlüsse für die Zuführung von Reaktanden und die Abführung von Produkten können entweder aus Metall oder aus Kunststoff bestehen. Falls das Grundmaterial der Reaktorlagen aus Metall besteht, können die Anschlüsse aus demselben Material bestehen. Der gefügte mikrostrukturierte Reaktor kann vorzugsweise durch Löten, Kleben oder Verschrauben auf Deckplatten montiert werden.

Die nachfolgend beschriebenen Figuren dienen zur näheren Erläuterung der Erfindung.

Fig. 1 zeigt ein schematisches Ablaufdiagramm des erfindungsgemäßen Verfahrens mit einer Abscheidung der Fügeschicht in den Fügebereichen und Durchführungen.

Fig. 2 zeigt ein schematisches Ablaufdiagramm des erfindungsgemäßen Verfahrens mit einer Abscheidung der Fügeschicht ausschließlich in den Fügebereichen.

Fig. 3 zeigt die Abhängigkeit der Methanol-Konversionsrate (in mol$^{-1}$·s$^{-1}$· g$^{-1}$ $_{Katalysator}$) als Funktion der Reaktionstemperatur eines mit Süd-Chemie Katalysator G-66-MR beladenen Festbettreaktors und ein mit einer Beschichtung des gleichen Katalysators versehenen mikrostrukturierten Reaktors aus Beispiel 1.

Fig. 4 zeigt Leistungsdaten des mikrostrukturierten Methan-Dampf-Reformers aus Beispiel 2.

Fig. 5 zeigt Leistungsdaten des mikrostrukturierten Methan-Dampf-Reformers aus Beispiel 3.

Fig. 6 zeigt Leistungsdaten des Katalysators 46-8M (ICI) in einem Festbettreaktor.

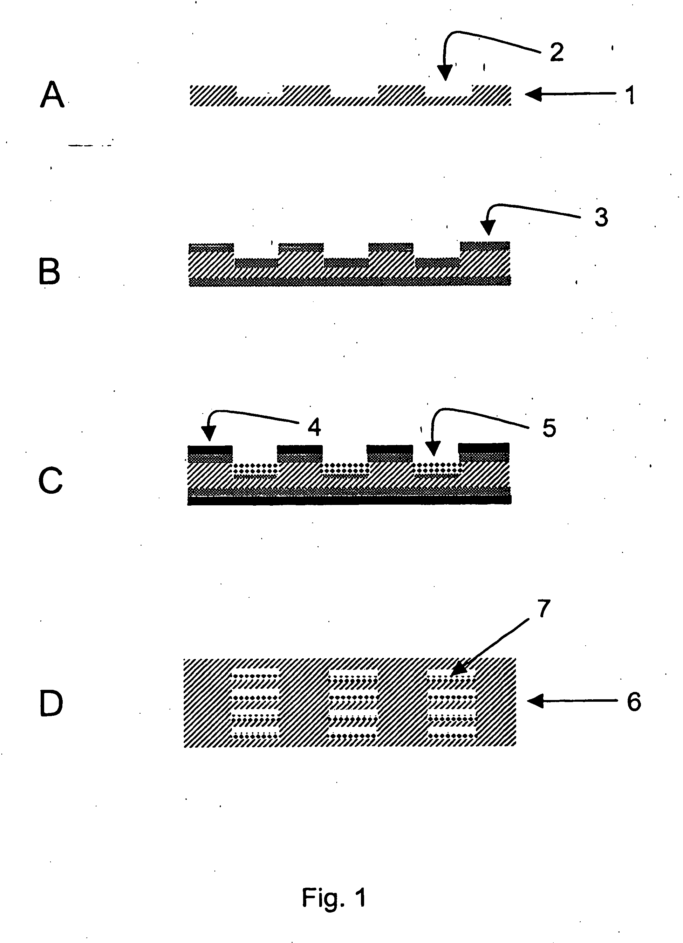

In Fig. 1 ist ein schematisches Ablaufdiagramm des erfindungsgemäßen Verfahrens mit einer Abscheidung der Fügeschicht in den Fügebereichen und Durchführungen angegeben:

Unter A ist eine Reaktorlage 1 schematisch dargestellt. Diese Lage 1 kann aus einem homogenen Material besteht, beispielsweise ein Metallblech sein, oder auch aus einem schichtweise aufgebauten Material bestehen, beispielsweise aus einem Kern mit beidseitig aufgebrachten Metalllagen. In einem ersten Verfahrensschritt werden zunächst Durchführungen, hier Vertiefungen 2 für Reaktionskanale, in dem Reaktorlagenmaterial 1 gebildet. Hierzu steht eines der vorstehend beschriebenen Verfahren zur Verfügung. In Darstellung B ist gezeigt, dass danach in den Fügebereichen und Durchführungen zunächst eine Fügeschicht 3 aufgebracht wird. Gemäß Darstellung C wird die Reaktorlage 1 dann ausschließlich in den Fügebereichen mit einer Abdeckung 4 überzogen, beispielsweise einer Fotoresist- oder Lackschicht. Danach wird die Reaktorlage 1 in den Vertiefungen 2 mit dem Katalysator 5 beladen (Darstellung C). Selbst dann wenn Katalysator 5 auch auf die Abdeckung 4 gelangt, wird dieser zusammen mit der Abdeckung 4 von der Reaktorlage entfernt, so dass schließlich in den Fügebereichen die Fügeschicht 3 und in den Durchführungsbereichen die Katalysatorschicht 5 exponiert sind. Die Reaktorlagen 1 werden gemäß Darstellung D gestapelt und zu einem Bauteil 6 gefügt, wobei der Katalysator 5 gleichzeitig in den gewünschten kalzinierten Zustand 7 überführt wird. Derartige Reaktorlagen können zusammen mit unstrukturierten und nicht mit Katalysator beschichteten Lagen alternierend gestapelt und gefügt werden, wobei an den Stirnseiten des Stapels jeweils Deckplatten mit Ein- und Auslässen für das Reaktionsmedium vorgesehen sind.

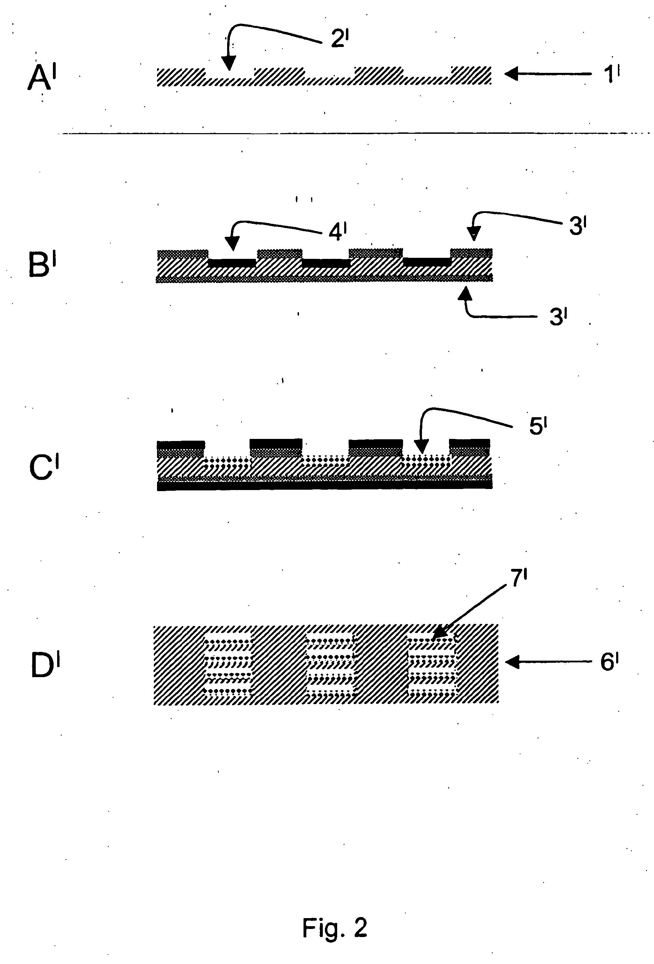

In Fig. 2 ist ein schematisches Ablaufdiagramm des erfindungsgemäßen Verfahrens mit einer Abscheidung der Fügeschicht ausschließlich in den Fügebereichen gezeigt:

Zunächst wird von einem Basismaterial 1$^l$ mit Durchführungen 2$^l$ ausgegangen. Dies entspricht Darstellung A' in Fig. 2. Zur Herstellung der Fügeschicht 3$^l$ ausschließlich in den Fügebereichen werden danach gemäß Darstellung B$^l$ die Durchführungen 2$^l$ mit einer Abdeckung 4$^l$ überzogen, so dass die Fügeschicht 3$^l$ bei der anschließenden Abscheidung der Fügeschicht nicht in die Durchführungen 2$^l$ gelangt. Die Fügeschicht 3$^l$ befindet sich ausschließlich in den Fügebereichen. Anschließend wird wieder eine Abdeckung aufgebracht, um zu verhindern, dass Katalysator 5$^l$ im darauf folgenden Verfahrensschritt auf die abgeschieden Fügeschicht gelangt. Das so hergestellte Zwischenprodukt entspricht der in Darstellung C$^l$ in Fig. 2 gezeigten Reaktorlage. Danach wird der Katalysator getrocknet, der Schutzlack oder Resist wird entfernt, und mehrere derartiger Reaktortagen 1$^l$ werden gestapelt und zum Bauteil 6$^l$ gefügt. Dabei wird der Katalysator 5$^l$ in den kalzinierten Zustand 7' überführt.

Die nachfolgenden Beispiele dienen der näheren Erläuterung der Erfindung:

**Beispiel 1:** Mikrostrukturierter Reaktor aus AlMg3 zur Dampf-Reformierung von Methanol:

Bleche aus AlMg3 wurden mittels Fotolithographie und chemischen Ätzens strukturiert. Hierzu wurde eines der in DE 197 08 472 C2 beschriebenen Verfahren eingesetzt. Für die Reaktorlage wurden jeweils 63 Kanäle mit einem Kanalquerschnitt von 0,5 mm x 0,23 mm und einer Länge von 47 mm in dem Blech gebildet. Das Gesamtvolumen der Kanäle eines Blechs betrug 294 mm$^3$. Weiterhin wurden eine Deckplatte und eine Bodenplatte hergestellt, die den Reaktorstapel abschließen. Durchbrüche in der Deckplatte zur Anbringung von Reaktoranschlüssen wurden gebohrt.

Vor der Aufbringung einer Fügeschicht auf den Fügebereichen und Durchführungen wurde das Reaktorblech gereinigt und vorbehandelt. Diese Prozedur umfasste folgende Einzelschritte: 1) Entfetten, 2) Beizen, 3) Zinkat-Beizen (derartige Schritte und die hierfür erforderlichen Chemikalien sind auf dem Gebiet allgemein bekannt). Nach der Erzeugung einer homogenen Zinkat-Schicht im letzten Schritt der Vorbehandlung wurde die metallische Abscheidung der Fügeschicht gemäß folgender Verfahrensreihenfolge begonnen: 1) 5 $\mu$m Nickel (chemisch oder galvanisch), 2) Vor-Silber (galvanisch), 3) 8 $\mu$m Silber (galvanisch), 4) 3 $\mu$m Zinn (galvanisch). Auch diese Verfahrensschritte sowie die hierfür erforderlichen Chemikalien sind auf dem Gebiet allgemein bekannt.

In einem weiteren Prozessschritt wurde auf die strukturierten Bleche beidseitig ein Trockenfilm-Fotoresist (DuPont R PM 110) laminiert, strukturiert und entwickelt, so dass alle Bereiche der Fügeschichten außer den Kanälen bedeckt waren.

Anschließend wurde ein geeigneter Katalysator in Pulverform (G66-MR der Süd-Chemie AG, Deutschland) mit 1 Gew.-% eines Dispergieradditivs in 75 Gew.-% Isopropanol suspendiert Nach einem Mahlprozess betrug die durchschnittliche Teilchengröße des Katalysators 1-5 $\mu$m. Abschließend wurde die Suspension 10 min lang mit einem Ultraschall-Desintegrator homogenisiert.

Die Katalysatorsuspension wurde dann mit einer Sprühpistole flächig auf die strukturierte Seite der Bleche appliziert und 1 h lang bei 100°C getrocknet.

In einem weiteren Prozessschritt wurde der Trockenfilm-Fotoresist nasschemisch entfernt, die Bleche mit entionisiertem Wasser gespült und 1 h lang bei 100°C getrocknet. Die Katalysatorbeladung pro Blech betrug 23 mg, die Katalysatorschichtdicke im Mittel 20 $\mu$m.

Fünf mikrostrukturierte lot- und katalysatorbeschichtete Bleche wurden anschließend mit der Deck- und der Bodenplatte so übereinander gelegt, dass ein Stapel entstand, zwischen denen das Lot vorlag. In einem Vakuum-Ofen wurde die gewünschte Löttemperatur von 290°C mit einer Aufheizrate von 30 K/min angesteuert. Die Temperatur wurde dann 30 min lang gehalten. Während des gesamten Lötprozesses wurde ein Druck von 4,5 MPa auf den Stapel ausgeübt. Bei nicht aktiver Kühlung betrug die Dauer der Abkühlphase 90 min. Die Kalzinierung des Katalysators fand simultan zum Fügeverfahren des mikrostrukturierten Reaktors statt.

Die Wirksamkeit der Methanolreformierungen wurde wie folgt untersucht:

Zur Berechnung der Wasserstoffausbeute, d.h. des Methanolumsatzes, wurden folgende Beziehungen hergeleitet:

$$H_{2out}[ml/\min] = 3 \cdot \frac{H_{2out}[\%]}{100} \cdot \frac{Ar_{in}[ml/\min] + CH_3OH_{in}[ml/\min] + H_2O_{in}[ml/\min]}{3 - 2 \cdot \frac{H_{2out}[\%]}{100}}$$

wobei

$H_{2out}$ ml/min      der vom Gaschromatographen ermittelte Wasserstofffluss am Reaktorausgang;

$H_{2out}$ [%]      die vom Gaschromatographen ermittelte Wasserstoffkonzentration im Gasgemisch am Reaktorausgang (inklusive Argon);

$Ar_{in}$ [ml/min]      der Argonfluss durch den mikrostrukturierten Reaktor;

$CH_3OH_{in}$ [ml/min]      der Methanol-Dampffluss in den mikrostrukturierten Reaktor;

$H_2O_{in}$ [ml/min]      der Wasser-Dampffluss in den mikrostrukturierten Reaktor ist.

$$H_2[\%] = \frac{H_{2out}[ml/\min]}{3 \cdot CH_3OH_{in}[ml/\min]} \cdot 100$$

wobei

$H_2$ [%]        die Wasserstoffausbeute, bezogen auf Methanol/Wasser, d.h. die Methanolumsatzrate, ist.

Grundlage für diese Formeln ist die Reaktionsgleichung für die MethanolWasser-Reformierung:

$$CH_3OH + H_2O \rightarrow CO_2 + 3\,H_2$$

Der Eduktfluss während des Performance-Tests betrug 100 ml/min, die Zusammensetzung jeweils 33 Mol-% Methanol, Wasser und Inertgas.

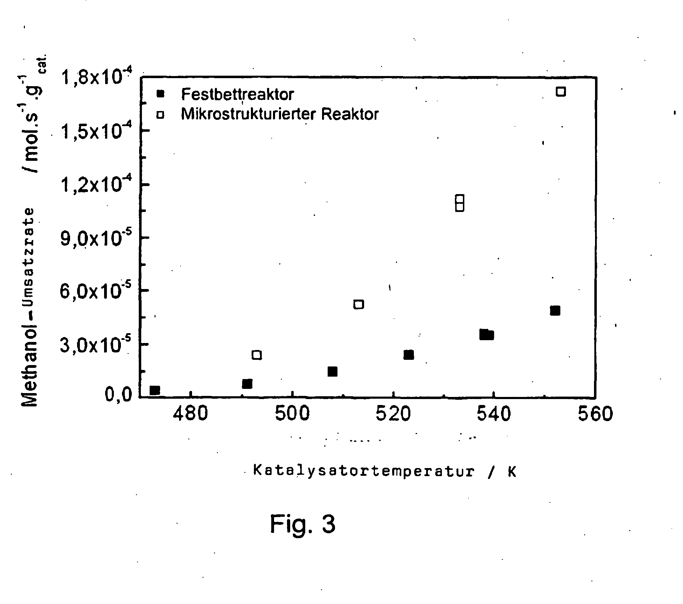

In Fig. 3 sind Ergebnisse der Methanolreformierung in Abhängigkeit von der Reaktionstemperatur im Vergleich eines erfindungsgemäß hergestellten Mikroreaktors mit einem konventionellen Festbettreaktor dargestellt.

**Beispiel 2**: Bei 800°C gefügter mikrostrukturierter Reaktor aus Nicrofer 3220H zur Dampf-Reformierung von Methan:

Bleche aus Nicrofer 3220H wurden mittels Fotolithographie und chemischen Ätzens strukturiert. Hierzu wurde eines der in DE 197 08 472 C2 beschriebenen Verfahren eingesetzt. Für die Reaktorlage wurden jeweils 21 Kanäle mit einem Kanalquerschnitt von 0,5 mm x 0,25 mm und einer Länge von 28 mm in dem Blech gebildet. Das Gesamtvolumen der Kanäle eines Blechs betrug 115 mm$^3$. Weiterhin wurden eine Deckplatte und eine Bodenplatte hergestellt, die den Reaktorstapel abschließen sollten. Durchbrüche in der Deckplatte zur Anbringung von Reaktoranschlüssen wurden gebohrt.

Vor der Aufbringung einer Fügeschicht in den Fügebereichen und Durchführungen wurde das Reaktorblech gereinigt und vorbehandelt. Diese Prozedur umfasste folgende Einzelschritte: 1) Entfetten, 2) Beizen, 3) elektrolytisches Entfetten, 4) Ätzreinigen/Dekapieren. Im letzten Schritt der Vorbehandlung wurde die metallische Abscheidung der Fügeschicht gemäß folgender Verfahrensfolge begonnen: 1) Ni-Strike, 2) Nickel/Phosphor-Legierung mit 10-14 Gew.-% Phosphor (chemisch). Auch diese Verfahrensschritte sowie die hierfür erforderlichen Chemikalien sind auf dem Gebiet allgemein bekannt.

In einem weiteren Prozessschritt wurde auf die strukturierten Bleche beidseitig ein Trockenfilm-Fotoresist (DuPont R PM 110) laminiert, strukturiert und entwickelt, so dass alle Bereiche der Fügeschichten außer den Kanälen bedeckt waren.

Anschließend wurde ein geeigneter Katalysator in Pulverform (46-8M von ICI) mit Hilfe eines Dispergieradditivs (1 Gew.-%) in Wasser suspendiert und mit einem Dispenser in die Kanäle überführt. Die Bleche wurden für 1 h bei 100°C getrocknet.

In einem weiteren Prozessschritt wurde der Trockenfilm-Fotoresist nasschemisch entfernt, die Bleche mit entionisiertem Wasser gespült und 1 h lang bei 100°C getrocknet. Die Katalysatorbeladung pro Blech betrug 13 mg.

Zwei mikrostrukturierte Fügehilfsschicht- und katalysatorbeschichtete Bleche wurden anschließend mit der Deck- und der Bodenplatte so übereinander gelegt, dass ein Stapel entstand, zwischen denen die Fügehilfsschicht vorlag. In einem Vakuum-Ofen wurde die gewünschte Fügetemperatur von 800°C mit einer Aufheizrate von 25 K/min angesteuert. Die Temperatur wurde dann 4 h lang gehalten. Während des gesamten Fügeprozesses wurde ein Gewicht von 10 kg auf dem Stapel positioniert. Die Dauer der Abkühlphase betrug 60 min. Die Kalzinierung des Katalysators fand simultan zum Fügeverfahren des mikrostrukturierten Reaktors statt.

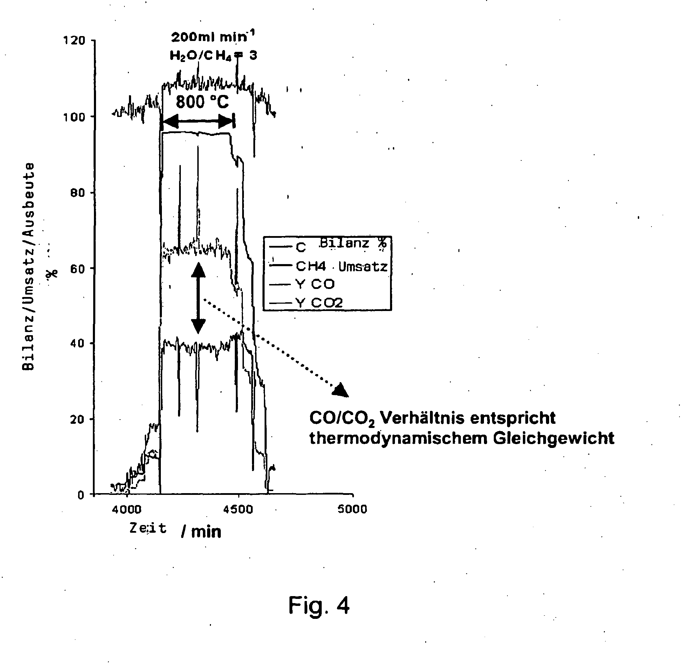

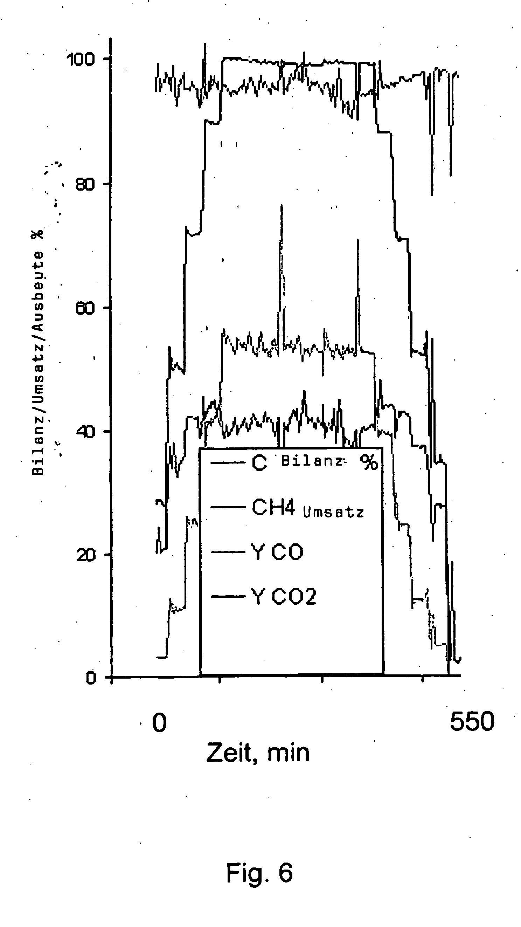

Die Leistungsdaten des mikrostrukturierten Reaktors für die Methan Dampf-Reformierung bei einer Reaktionstemperatur von 800 °C und einem molaren Dampf/Methan Verhältnis von 3, sind in Tab. 1 und Fig. 4 (bei einem Eduktfluss von 200 ml · min$^{-1}$) zusammengefasst. Zum Vergleich ist die Aktivität des gleichen Katalysators in einem konventionellen Festbettreaktor unter gleichen Prozessbedingungen in Fig. 6 gezeigt. Die Methan-Umsätze des mikrostrukturierten Reaktors aus Beispiel 2 und des konventionellen Festbettreaktors mit gleichem Katalysator sind vergleichbar, die $CO/CO_2$-Verhältnisse in den Produktströmen unterscheiden sich deutlich. Ein Vergleich mit theoretischen Daten zeigt, dass der mikrostrukturierte Reaktor aus Beispiel 2 am thermodynamischen Gleichgewicht arbeitet.

Tabelle 1: Methan-Umsatz der mikrostrukturierten Methan-Dampf-Reformer aus Beispiel 2 und 3 mit einem molaren Dampf/Methan-Verhältnis von 3, einer Reaktionstemperatur von 800°C und unterschiedlichen Eduktflüssen.

| Durchfluss [ml · min$^{-1}$] | 100 | 200 | 300 | 400 | 500 |
|---|---|---|---|---|---|
| Fügetemperatur [°C] | Methan-Umsatz | | | | |
| 800 (Beispiel 2) | 98,3 | 84,8 | 56,1 | 27,4 | 11,8 |
| 1100 (Beispiel 3) | < 10 | < 10 | < 5 | ~ 0 | ~ 0 |

**Beispiel 3:** Bei 1100°C gefügter mikrostrukturierter Reaktor aus Nicrofer 3220H zur Dampf-Reformierung von Methan:

Die Prozessabfolge zur Herstellung des mikrostrukturierten Reaktors entsprach der in Beispiel 2 beschriebenen, mit dem Unterschied, dass dieser Reaktor bei einer Temperatur von 1100°C für 1 h gefügt wurde. Diese Temperatur entspricht der typischerweise zum Diffusionsschweißen verwendeten Temperatur für den Werkstoff Nicrofer 3220 H.

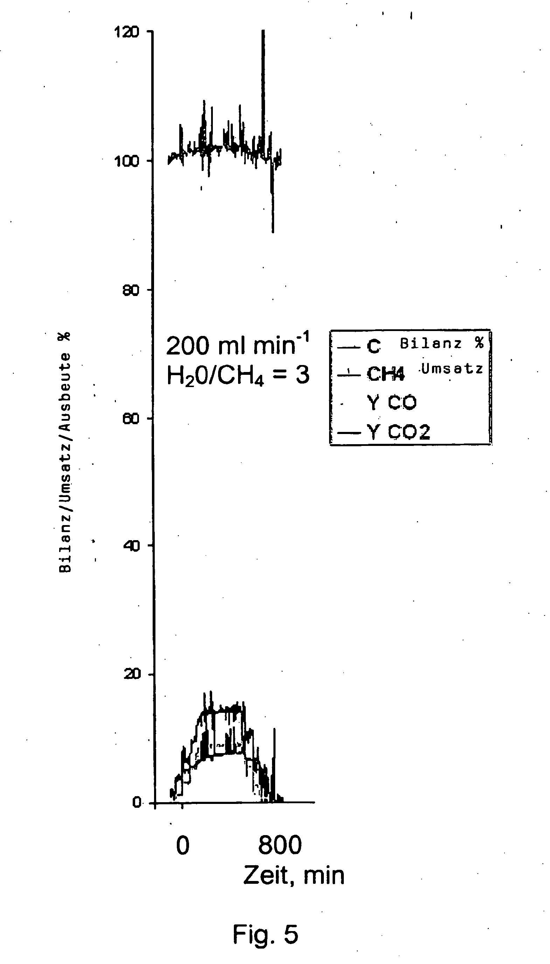

Die Leistungsdaten des mikrostrukturierten Reaktors für die Methan-Dampf-Reformierung sind in Tabelle 1 und Fig. 5 zusammengefasst.

Es konnte nachgewiesen werden,

1. dass nach dem erfindungsgemäßen Verfahren die Leistung des bei 800°C gefügten Reaktors (Beispiel 2) bezüglich des Eduktumsatzes am gleichen Arbeitspunkt nach dem erfindungsgemäßen Verfahren deutlich besser ist als die des bei 1100°C gefügten Reaktors (Beispiel 3); hiermit konnte gezeigt werden, dass die erfindungsgemäße verfahrenstechnische Reduktion der Fügetemperatur einen unmittelbaren positiven Einfluss auf die Katalysatoraktivität und damit die Gesamtleistung des Bauteils hat;

2. dass das $CO/CO_2$-Verhältnis im Produktstrom des Reaktors aus Beispiel 2 dem des thermodynamischen Gleichgewichts entspricht; der Arbeitsbereich innerhalb des thermodynamischen Gleichgewichtes ist Beleg für die optimale Effizienz der Prozessführung im Hinblick auf Ausbeute des Eduktstromes; im Vergleich zeigt der gleiche Katalysator in einem konventionellen Festbettreaktor, unter identischen Arbeitsparametern ein weit vom thermodynamischen Gleichgewicht entferntes $CO/CO_2$-Verhältnis und damit eine geringere Effizienz und Leistung als der nach dem erfindungsgemäßen Verfahren gefertigte Reaktor aus Beispiel 2.

**Patentansprüche**

1. Verfahren zur Herstellung eines mit Katalysator beladene Durchführungen aufweisenden microstrukturierten Reaktors, umfassend folgende Verfahrensschritte:

   a. Herstellen von Reaktorlagen, die Fügebereiche sowie Durchführungsbereiche, in denen die Durchführungen gebildet werden, aufweisen,
   b. Aufbringen mindestens einer Fügeschicht auf die Reaktorlagen in den Fügebereichen,
   c. Beladen der Reaktorlagen in den Durchführungsbereichen mit dem Katalysator und
   d. Fügen der Reaktorlagen,

   **dadurch gekennzeichnet, dass** die mindestens eine Fügeschicht aufgebracht und in den Fügebereichen maskiert wird, bevor die Reaktorlagen mit dem Katalysator beladen werden.

2. Verfahren nach Anspruch 1, **dadurch gekennzeichnet, dass** die mindestens eine Fügeschicht ausschließlich in den Fügebereichen oder vollflächig auf die Reaktorlagen aufgebracht wird.

3. Verfahren nach einem der vorstehenden Ansprüche, **dadurch gekennzeichnet, dass** vor oder nach dem Aufbringen der mindestens einen Fügeschicht auf die Reaktorlagen in den Durchführungsbereichen auf den Reaktorlagen Vertiefungen gebildet werden und dass die Vertiefungen mit dem Katalysator beladen werden.

4. Verfahren nach Anspruch 3, **dadurch gekennzeichnet, dass** die Vertiefungen mit einem galvanotechnischen Verfahren oder durch chemisches Ätzen, Fräsen, Prägen oder Stanzen gebildet werden.

5. Verfahren nach einem der vorstehenden Ansprüche, **dadurch gekennzeichnet, dass** die mindestens eine Fügeschicht vor dem Beladen der Reaktorlagen in den Fügebereichen mit einer Abdeckung maskiert und die Abdeckung nach dem Beladen wieder entfernt wird.

6. Verfahren nach einem der vorstehenden Ansprüche, **dadurch gekennzeichnet, dass** der Katalysator im *wash-coat*-Verfahren aufgebracht wird.

7. Verfahren nach einem der vorstehenden Ansprüche, **dadurch gekennzeichnet, dass** der Katalysator beim Fügen der Reaktorlagen kalziniert wird.

8. Verfahren nach einem der vorstehenden Ansprüche, **dadurch gekennzeichnet, dass** der Katalysator mindestens einen Katalysatorträger und mindestens ein katalytisches Metall enthält.

**9.** Verfahren nach einem der vorstehenden Ansprüche, **dadurch gekennzeichnet, dass** in den Durchführungsbereichen auf den Reaktorlagen eine Schicht aus einem Oxidmaterial gebildet wird, bevor die Reaktorlagen mit dem Katalysator beladen werden.

**10.** Verfahren nach Anspruch 9, **dadurch gekennzeichnet, dass** das Oxidmaterial ausgewählt ist aus der Gruppe, umfassend Aluminiumoxid, Silica, Silkate, Alumosilikate, Titandioxid und Zirkoniumdioxid.

**11.** Verfahren nach einem der vorstehenden Ansprüche, **dadurch gekennzeichnet, dass** die mindestens eine Fügeschicht eine Lotschicht bildet.

**12.** Verfahren nach Anspruch 11, **dadurch gekennzeichnet, dass** die Lotschicht aus mindestens einer hoch schmelzenden und mindestens einer niedrig schmelzenden Lotteilschicht gebildet ist.

**13.** Verfahren nach Anspruch 12, **dadurch gekennzeichnet, dass** die mindestens eine hoch schmelzende Lotteilschicht aus mindestens einem Metall besteht, ausgewählt aus der Gruppe, umfassend Silber, Gold, Nickel und Kupfer.

**14.** Verfahren nach einem der Ansprüche 12 und 13, **dadurch gekennzeichnet, dass** die mindestens eine niedrig schmelzende Lotteilschicht aus mindestens einem Metall besteht, ausgewählt aus der Gruppe, umfassend Zinn, Indium und Wismut.

**15.** Verfahren nach einem der Ansprüche 12-14, **dadurch gekennzeichnet, dass** die hoch schmelzende Lotteilschicht aus Silber und die niedrig schmelzende Lotteilschicht aus Zinn besteht.

**16.** Verfahren nach einem der Ansprüche 12-15, **dadurch gekennzeichnet, dass** die Reaktorlagen mit einem Schmelzdiffusionslötverfahren gefügt werden.

**17.** Verfahren nach einem der Ansprüche 1 - 9, **dadurch gekennzeichnet, dass** die mindestens eine Fügeschicht eine Fügehilfsschicht ist.

**18.** Verfahren nach Anspruch 17, **dadurch gekennzeichnet, dass** die Fügehilfsschicht aus mindestens einem Element, ausgewählt aus der Gruppe, umfassend Kohlenstoff, Silber, Kupfer, Eisen, Nickel, Gold, Palladium, Mangan, Chrom und Zink, oder aus einer Legierung aus mindestens einem Metall, ausgewählt aus der Gruppe, umfassend Nickel, Eisen, Kobalt, Chrom und Mangan, mit mindestens einem Element, ausgewählt aus der Gruppe, umfassend Phosphor, Bor und Kohlenstoff, besteht.

**19.** Verfahren nach einem der vorstehenden Ansprüche, **dadurch gekennzeichnet, dass** eine multifunktionelle Barriereschicht in den Fügebereichen auf die Reaktorlagen aufgebracht wird, bevor die mindestens eine Fügeschicht aufgebracht wird.

**20.** Verfahren nach Anspruch 19, **dadurch gekennzeichnet, dass** die Barriereschicht aus mindestens einem Metall, ausgewählt aus der Gruppe, umfassend Molybdän, Mangan, Eisen, Eisen/Phosphor-Legierungen, Rhenium, Rhodium, Platin, Palladium, Nickel und Nickel/Phosphor-Legierungen, mit einer Dicke im Bereich von 1 bis 20 $\mu$m, besteht.

**21.** Verfahren nach einem der vorstehenden Ansprüche, **dadurch gekennzeichnet, dass** die Reaktorlagen aus Metall bestehen.

**22.** Verfahren nach Anspruch 21, **dadurch gekennzeichnet, dass** das Metall ausgewählt ist aus der Gruppe, umfassend Kupfer, Tantal, Aluminium, Nickel, Titan und deren Legierungen, sowie Edelstähle.

**23.** Verwendung des nach einem der Verfahren gemäß den Ansprüchen 1-22 hergestellten mikrostrukturierten Reaktors als Reformer von Kohlenwasserstoffen und Alkoholen.

**Claims**

**1.** Method for production of a microstructured reactor which has passage loaded with catalyst, comprising the following method steps:

    a. production of reactor layers which have joint regions and passage regions in which the passages are formed,
    b. application of at least one joint layer on the reactor layers in the joint regions,
    c. loading the reactor layers in the passage regions with the catalyst and
    d. joining the reactor layers,

**characterised in that** the at least one joint layer is applied and is masked in the joint regions before the reactor layers are loaded with the catalyst.

2. Method according to claim 1, **characterised in that** the at least one joint layer is applied on the reactor layers exclusively in the joint regions or over the entire surface area.

3. Method according to one of the preceding claims, **characterised in that** depressions are formed before or after application of the at least one joint layer on the reactor layers in the passage regions and **in that** the depressions are loaded with the catalyst.

4. Method according to claim 3, **characterised in that** the depressions are formed by an electroplating method or by chemical etching, milling, embossing or punching.

5. Method according to one of the preceding claims, **characterised in that** the at least one joint layer is masked with a cover before loading the reactor layers in the joint regions and the cover is removed again after loading.

6. Method according to one of the preceding claims, **characterised in that** the catalyst is applied in the *wash-coat* method.

7. Method according to one of the preceding claims, **characterised in that** the catalyst is calcinated when joining the reactor layers.

8. Method according to one of the preceding claims, **characterised in that** the catalyst contains at least one catalyst carrier and at least one catalytic metal.

9. Method according to one of the preceding claims, **characterised in that** a layer comprising an oxide material is formed in the passage regions on the reactor layers before the reactor layers are loaded with the catalyst.

10. Method according to claim 9, **characterised in that** the oxide material is selected from the group comprising aluminium oxide, silica, silicates, alumosilicates, titanium dioxide and zirconium dioxide.

11. Method according to one of the preceding claims, **characterised in that** the at least one joint layer forms a solder layer.

12. Method according to claim 11, **characterised in that** the solder layer is formed from at least one high-melting and at least one low-melting partial solder layer.

13. Method according to claim 12, **characterised in that** the at least one high-melting partial solder layer comprises at least one metal selected from the group comprising silver, gold, nickel and copper.

14. Method according to one of the claims 12 and 13, **characterised in that** the at least one low-melting partial solder layer comprises at least one metal selected from the group comprising tin, indium and bismuth.

15. Method according to one of the claims 12 - 14, **characterised in that** the high-melting partial solder layer comprises silver and the low-melting partial solder layer comprises tin.

16. Method according to one of the claims 12 - 15, **characterised in that** the reactor layers are joined by a melt diffusion soldering method.

17. Method according to one of the claims 1 - 9, **characterised in that** the at least one joint layer is an auxiliary joint layer.

18. Method according to claim 17, **characterised in that** the auxiliary joint layer comprises at least one element selected from the group comprising carbon, silver, copper, iron, nickel, gold, palladium, manganese, chromium and zinc or from an alloy comprising at least one metal selected from the group comprising nickel, iron, cobalt, chromium and manganese, and at least one element selected from the group comprising phosphorus, boron and carbon.

19. Method according to one of the preceding claims, **characterised in that** a multi-functional barrier layer is applied in the joint regions on the reactor layers before the at least one joint layer is applied.

20. Method according to claim 19, **characterised in that** the barrier layer comprises at least one metal selected from the group comprising molybdenum, manganese, iron, iron/phosphorus alloys, rhenium, rhodium, platinum, palladium, nickel and nickel/phosphorus alloys, having a thickness in the range of 1 to 20 $\mu$m.

21. Method according to one of the preceding claims, **characterised in that** the reactor layers comprise metal.

22. Method according to claim 21, **characterised in that** the metal is selected from the group comprising copper, tantalum, aluminium, nickel, titanium and alloys thereof, and also stainless steels.

23. Use of the microstructured reactor produced according to one of the methods according to claims 1 - 22 as reformer of hydrocarbons and alcohols.

**Revendications**

1. Procédé de production d'un réacteur microstructuré présentant des passages chargés en catalyseur, comprenant les étapes de procédé suivantes :

   a. production de couches du réacteur qui présentent des zones de jonction ainsi que des zones de passage, dans lesquelles les passages sont formés,
   b. application d'au moins une couche de jonction sur les couches du réacteur dans les zones de jonction,
   c. chargement en catalyseur des couches du réacteur dans les zones de passage et
   d. jonction des couches du réacteur,

   **caractérisé en ce qu'**au moins une couche de jonction est appliquée et masquée dans les zones de jonction, avant que les couches du réacteur ne soient chargées en catalyseur.

2. Procédé selon la revendication 1, **caractérisé en ce qu'**au moins une couche de jonction est exclusivement appliquée dans les zones de jonction ou sur toute la surface des couches du réacteur.

3. Procédé selon l'une quelconque des revendications précédentes, **caractérisé en ce qu'**avant ou après l'application d'au moins une couche de jonction sur les couches du réacteur dans les zones de passage, des cavités sont formées sur les couches du réacteur et, **en ce que** les cavités sont chargées en catalyseur.

4. Procédé selon la revendication 3, **caractérisé en ce que** les cavités sont formées à l'aide d'un procédé galvanoplastique ou par corrosion chimique, fraisage, gaufrage ou estampage.

5. Procédé selon l'une quelconque des revendications précédentes, **caractérisé en ce qu'**au moins une couche de jonction est masquée avant le chargement des couches du réacteur dans les zones de jonction à l'aide d'un couvercle et le couvercle est retiré après le chargement.

6. Procédé selon l'une quelconque des revendications précédentes, **caractérisé en ce que** le catalyseur est appliqué dans le procédé *wash-coat.*

7. Procédé selon l'une quelconque des revendications précédentes, **caractérisé en ce que** le catalyseur est calciné lors de la jonction des couches du réacteur.

8. Procédé selon l'une quelconque des revendications précédentes, **caractérisé en ce que** le catalyseur contient au moins un support de catalyseur et au moins un métal catalytique.

**9.** Procédé selon l'une quelconque des revendications précédentes, **caractérisé en ce que** dans les zones de passage sur les couches du réacteur est formée une couche d'une matière oxydée, avant que les couches du réacteur ne soient chargées en catalyseur.

**10.** Procédé selon la revendication 9, **caractérisé en ce que** la matière oxydée est choisie dans le groupe comprenant l'oxyde d'aluminium, la silice, le silicate, le silicate d'aluminium, le dioxyde de titane et le dioxyde de zirconium.

**11.** Procédé selon l'une quelconque des revendications précédentes, **caractérisé en ce qu'**au moins une couche de jonction forme une couche de brasure.

**12.** Procédé selon la revendication 11, **caractérisé en ce que** la couche de brasure est formée par au moins une couche partielle de brasure à point de fusion élevé et au moins une couche partielle de brasure à bas point de fusion.

**13.** Procédé selon la revendication 12, **caractérisé en ce qu'**au moins une couche partielle de brasure à point de fusion élevé est composée d'au moins un métal choisi dans le groupe comprenant l'argent, l'or, le nickel et le cuivre.

**14.** Procédé selon l'une quelconque des revendications 12 et 13, **caractérisé en ce qu'**au moins une couche partielle de brasure à bas point de fusion est composée d'au moins un métal choisi dans le groupe comprenant l'étain, l'indium et le bismuth.

**15.** Procédé selon l'une quelconque des revendications 12 à 14, **caractérisé en ce que** la couche partielle de brasure à point de fusion élevé est composée d'argent et la couche partielle de brasure à bas point de fusion d'étain.

**16.** Procédé selon l'une quelconque des revendications 12 à 15, **caractérisé en ce que** les couches du réacteur sont assemblées à l'aide d'un procédé de brasage de diffusion par fusion.

**17.** Procédé selon l'une quelconque des revendications 1 à 9, **caractérisé en ce qu'**au moins une couche de jonction est une couche auxiliaire de jonction.

**18.** Procédé selon la revendication 17, **caractérisé en ce que** la couche auxiliaire de jonction est composée d'au moins un élément choisi dans le groupe comprenant le carbone, l'argent, le cuivre, le fer, le nickel, l'or, le palladium, le manganèse, le chrome et le zinc, ou d'un alliage d'au moins un métal choisi dans le groupe comprenant le nickel, le fer, le cobalt, le chrome et le manganèse, avec au moins un élément choisi dans le groupe comprenant le phosphore, le bore et le carbone.

**19.** Procédé selon l'une quelconque des revendications précédentes, **caractérisé en ce qu'**une couche barrière multifonctionnelle est appliquée dans les zones de jonction sur les couches du réacteur, avant qu'au moins une couche de jonction ne soit appliquée.

**20.** Procédé selon la revendication 19, **caractérisé en ce que** la couche barrière est composée d'au moins un métal choisi dans le groupe comprenant le molybdène, le manganèse, le fer, les alliages fer/phosphore, le rhénium, le rhodium, le platine, le palladium, le nickel et les alliages de nickel/phosphore, dont l'épaisseur est comprise dans la plage entre 1 et 20 $\mu$m au maximum.

**21.** Procédé selon l'une quelconque des revendications précédentes, **caractérisé en ce que** les couches du réacteur sont composées de métal.

**22.** Procédé selon la revendication 21, **caractérisé en ce que** le métal est choisi dans le groupe comprenant le cuivre, le tantale, l'aluminium, le nickel, le titane et leurs alliages ainsi que les aciers spéciaux.

**23.** Utilisation du réacteur microstructuré selon l'un des procédés selon les revendications 1 à 22 comme réformeur d'hydrocarbures et d'alcools.

A

B

C

D

2

1

3

4

5

7

6

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19825102 C2
- EP 1415748 A2
- EP 1198344 B1
- EP 1198344 A
- DE 19708472 C2

**In der Beschreibung aufgeführte Nicht-Patentliteratur**

- **J.M.THOMAS ; W.J.THOMAS.** Principles and Practice of Heterogeneous Catalysis. *Verlag Chemie,* 1997
- **W. EHRFELD ; V. HESSEL ; H. LÖWE.** Microreactors. WILEY-VCH Verlag, 2000